# EUROPEAN PATENT APPLICATION

(11) **EP 1 602 697 A1**
(43) Date of publication of application: **07.12.2005**
(21) Application number: 04717751.4
(22) Date of filing: 05.03.2004
(51) Int. Cl.: C09D 183/02, C09D 183/04, C09D 7/12, C09D 5/00

(54) **HYDROPHILIZING AGENT COMPOSITION AND PROCESS FOR FORMATION OF HYDROPHILIC PROTECTIVE FILMS**

(30) Priority: 06.03.2003 JP 2003060310
(71) Applicant: NICCA CHEMICAL CO., LTD., Fukui-shi, Fukui 910-8670 (JP); HONDA MOTOR CO., Ltd., Tokyo 107-8556 (JP)
(72) Inventor: SAITO, Toru, c/o Nicca Chemical Co., Ltd., Fukui-shi, Fukui 9108670 (JP); TOCHIKAWA, Hirohumi, c/o Nicca Chemical Co., Ltd., Fukui-shi, Fukui 9108670 (JP); MAKINO, Masahiro, c/o Nicca Chemical Co., Ltd., Fukui-shi, Fukui 9108670 (JP); TOJO, Hideaki, c/o Honda Motor Co., Ltd., Tokyo 1078556 (JP)
(74) Representative: Setna, Rohan P.
(86) International application number: PCT/JP2004/002796
(87) International publication number: WO 2004/078864

(57) **Abstract**

A hydrophilic treatment composition containing a surfactant having a branched chain, a silicate compound expressed by the following general formula (1), at least one moiety selected from silane coupling agents expressed by the following general formulae (2) and (3), an organic solvent, a catalyst and water. 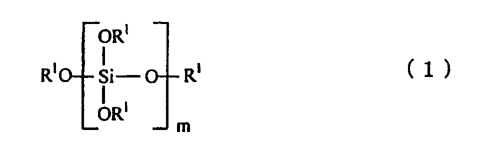 (wherein, in formula (1), R¹ may be identical or different, and respectively are a hydrogen atom or an alkyl group having 1-3 carbon atoms, and m is an integer from 1-40.)

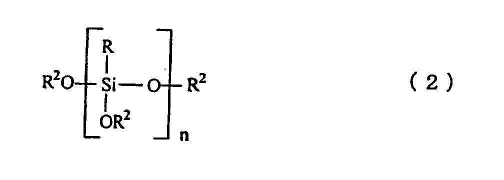

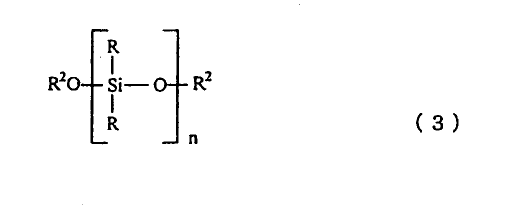

## Description

### Technical Field

This invention relates to a hydrophilic treatment composition, and to a method of forming a hydrophilic protective film using this composition. More specifically, it relates to a hydrophilic treatment composition which renders a hydrophobic resin surface or hydrophobic paint film surface hydrophilic, prevents deterioration of the resin or paint film and enhances washing off of surface dirt, and relates to a method of forming a hydrophilic protective film using this composition.

### Background Art

In the past, automobile users applied a water-repellent wax to protect an automobile paint film, and improve gloss and aesthetic appearance. However, if water droplets containing dirt adhered and dried, the dirt remained as smears. Moreover, with time the wax dissolved, and the dirt became more stubborn and unsightly. To improve this, some methods of rendering an automobile paint film surface hydrophilic have been proposed. As a coating having hydrophilic properties, a dirt-resistant coating composition has been disclosed which comprises an aliphatic sulfonic acid compound, a carboxyl group-containing compound, a specific organosilicate and a resin component (Ref. Japanese Patent Application Laid-Open No. 2002-69374). However, the treatment method using this coating composition was a method of coating in an automobile manufacturing process wherein the film thickness was adjusted to several tens of µm, and heat treatment was performed at 140°C for 30 minutes. It was difficult for a general user to easily apply this treatment method as a hydrophilic treatment.

Alternatively, a hydrophilic treatment agent containing a hydrolyzate of silicate compound, a nonionic surfactant, water and a hydrophilic organic solvent is applied to a substrate having a paint film surface which is hydrophilic or can be rendered hydrophilic, and dried (Ref. Japanese Patent Application Laid-Open No. 2002-273340). However, this treatment method was effective only for a substrate having a paint film surface which was hydrophilic or could be made hydrophilic, i.e., a base coating or clear coating material, and since these coating materials were treated during the automobile manufacturing process, it was difficult for a general user without plant and equipment to easily apply such hydrophilic treatment methods. If a partial hydrolyzate was used as the hydrolyzate of the silicate compound, the contact angle did not become small and the film did not become hydrophilic. Even if a complete hydrolyzate was used, if the heating temperature increased due to condensation and the heating time increased, hydrophilic hydroxyl groups produced by the hydrolysis underwent a condensation reaction and decreased, so the film produced was not sufficiently hydrophilic, the film became harder, and cracks appeared.

### Disclosure of the Invention

It is therefore an object of this invention, which was conceived in view of the above problems inherent in the prior art, to provide a hydrophilic treatment composition which can form a hydrophilic protective film having excellent hydrophilic properties, hardness, adhesive properties and antifouling properties on a resin surface or paint film surface having hydrophobic properties, to provide a hydrophilic treatment composition which can prevent soiling of a resin surface or paint film surface over a long period of time, and to provide a method of forming a hydrophilic protective film using this composition. More specifically, it is an object of this invention to provide a hydrophilic treatment composition which can form a uniform hydrophilic protective film by a simple procedure as when an ordinary user applies wax, whatever the paint film on the automobile surface may be, and without requiring any special high temperature treatment or prior preparation of the hydrophilic film or film which can be made hydrophilic after applying the hydrophilic treatment agent, wherein hydrophilic properties are obtained immediately after the film is formed so that self-cleaning properties are enhanced, and to provide a method of forming this hydrophilic protective film using this composition.

The Inventor, as a result of intensive studies to resolve the above problems, discovered that, in a hydrophilic protective film-forming method wherein a hydrophilic treatment composition comprising a surfactant having a specific structure, alkoxy silicate compound, silane coupling agent, organic solvent, catalyst and water was coated and allowed to dry naturally or at a relatively low temperature, a hydrophilic protective film could easily be formed on a resin surface or paint film surface having hydrophobic properties, and that as the film obtained had excellent hydrophilic properties, hardness, adhesive properties and antifouling properties, dirt could easily be removed by rainwater or wiping, which led to the present invention.

Specifically, the hydrophilic treatment composition of this invention contains a surfactant having a branched chain, a silicate compound expressed by the following general formula (1): 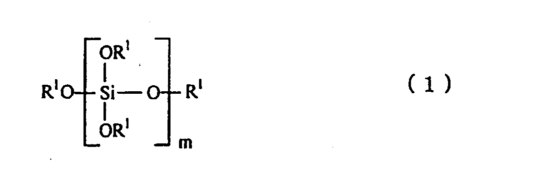 (wherein, in formula (1), R¹ may be identical or different, and respectively are a hydrogen atom or an alkyl group having 1-3 carbon atoms, and m is an integer from 1-40),
at least one moiety selected from silane coupling agents expressed by the following general formulae (2) and (3): 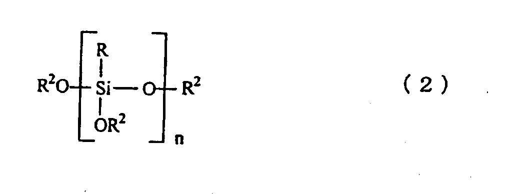 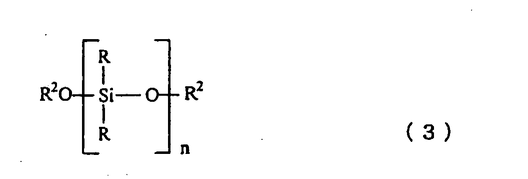 (wherein, in formulae (2) and (3), R may be identical or different, and respectively are an alkyl group having 1-8 carbon atoms or a hydrocarbon group selected from a group comprising vinyl, epoxy, amino, methacryl, mercapto and phenyl, R² may be identical or different, and respectively are a hydrogen atom or an alkyl group having 1-4 carbon atoms, and n is an integer from 1-10), an organic solvent, a catalyst and water.

In the method of forming the hydrophilic protective film of this invention, the hydrophilic treatment composition of this invention is applied to a substrate, and dried at 0-100°C.

Further, this invention provides a substrate to which a hydrophilic protective film has been applied by the method of this invention.

### Best Modes for Carrying Out the Invention

First, the hydrophilic treatment composition of this invention will be described. The hydrophilic treatment composition of this invention contains a surfactant having a branched chain, a silicate compound expressed by the following general formula (1): 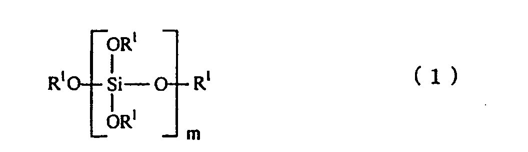 (wherein, in formula (1), R¹ may be identical or different, and respectively are a hydrogen atom or an alkyl group having 1-3 carbon atoms, and m is an integer from 1-40),
at least one moiety selected from silane coupling agents expressed by the following general formulae (2) and (3): 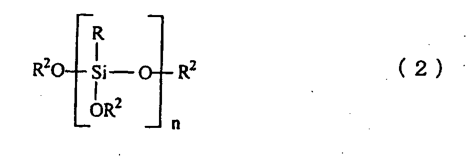 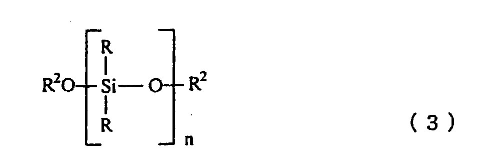 (wherein, in formulae (2) and (3), R may be identical or different, and respectively are an alkyl group having 1-8 carbon atoms or a hydrocarbon group selected from a group comprising vinyl, epoxy, amino, methacryl, mercapto and phenyl, R² may be identical or different, and respectively are a hydrogen atom or an alkyl group having 1-4 carbon atoms, and n is an integer from 1-10), an organic solvent, a catalyst and water.

The surfactant having a branched chain used in this invention is not particularly limited as to structure providing it is a surfactant with a hydrophobic group having a branched chain, and a hydrophilic group. Of these, anionic surfactants and non-ionic surfactants are preferred, but anionic surfactants are particularly preferred. The hydrophobic group having a branched chain is preferably at least one moiety selected from a group comprising an aliphatic hydrocarbon group having a side chain, acyl group having a side chain, aralkyl group having a side chain, polyoxypropylene group and polyoxy(ethylethylene) group, and the hydrophilic group is preferably at least one moiety selected from among a group comprising a sulfonic acid, sulphuric acid ester, carboxylic acid, phosphoric acid ester and salts thereof, and a polyoxyethylene group. The surfactant may comprise these hydrophobic groups and hydrophilic groups in any combination.

Describing now specific surfactants having a branched chain according to this invention, examples of anionic surfactants include:
the sulfosuccinic acid dialkyl ester salt type or sulfosuccinic acid di(polyoxyalkylene alkyl ether) ester salt type anionic surfactant expressed by the following general formula (4): 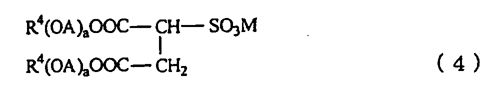 (wherein, R⁴ respectively are an alkyl group having 3-18 carbon atoms, alkenyl group having 3-18 carbon atoms or aralkyl group having 7-18 carbon atoms, A respectively are alkylene groups having 2-4 carbon atoms, a are respectively integers in the range 0-20, and M is a hydrogen atom, alkali metal, -NH₄ or organic amine);
the sulfosuccinic acid alkyl ester disalt type or sulfosuccinic acid (polyoxyalkylene alkyl ether) ester disalt type anionic surfactant expressed by the following general formula (5): 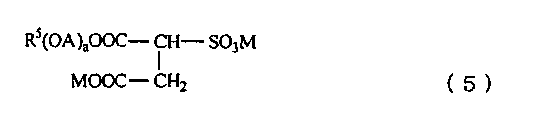 (wherein, R⁵ is an alkyl group having 3-18 carbon atoms, alkenyl group having 3-18 carbon atoms or aralkyl group having 7-18 carbon atoms, A is an alkylene group having 2-4 carbon atoms, a is an integer in the range 0-20, and M respectively are a hydrogen atom, alkali metal, -NH₄ or organic amine);
the sulfophthalic acid dialkyl ester salt type or sulfophthalic acid di(polyoxyalkylene alkyl ether) ester salt type anionic surfactant expressed by the following general formula (6): 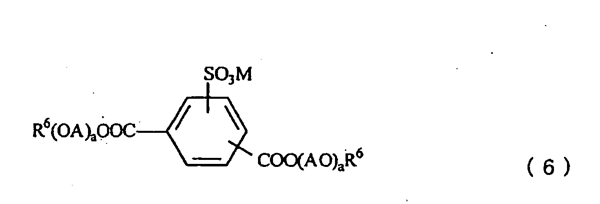 (wherein, R⁶ respectively are an alkyl group having 3-18 carbon atoms, alkenyl group having 3-18 carbon atoms or aralkyl group having 7-18 carbon atoms, A respectively are alkylene groups having 2-4 carbon atoms, a respectively are integers in the range 0-20, and M is a hydrogen atom, alkali metal, -NH₄ or an organic amine);
the alkylsulfuric acid ester salt type or polyoxyalkylene alkyl ether sulfuric acid ester salt type anionic surfactant expressed by the following general formula (7):

R⁷O(AO)ₐSO₃M (7)

(wherein, R⁷ is an alkyl group having 3-18 carbon atoms, alkenyl group having 3-18 carbon atoms or aralkyl group having 7-18 carbon atoms, A is an alkylene group having 2-4 carbon atoms, a is an integer in the range 0-20, and M is a hydrogen atom, alkali metal, -NH₄ or organic amine);
the secondary alcohol sulfuric acid ester salt type or polyoxyalkylene secondary alcohol ether sulfuric acid ester salt type anionic surfactant expressed by the following general formula (8): 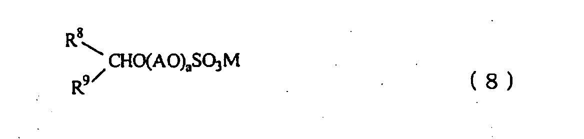 (wherein, R⁸, R⁹ are respectively alkyl groups having 1-10 carbon atoms or alkenyl groups having 1-10 carbon atoms, A is an alkylene group having 2-4 carbon atoms, a is an integer in the range 0-20, and M is a hydrogen atom, alkali metal, -NH₄ or organic amine);
the monofatty acid glyceryl sulfate type anionic surfactant expressed by the following general formula (9): 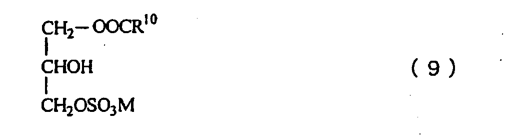 (wherein, R¹⁰ is an alkyl group having 3-18 carbon atoms, alkenyl group having 3-18 carbon atoms or aralkyl group having 7-18 carbon atoms, and M is a hydrogen atom, alkali metal, -NH₄ or organic amine);
the alkylolamide sulfuric acid ester salt type anionic surfactant expressed by the following general formula (10):

R¹¹CONH(CH₂)_{b}OSO₃M (10)

(wherein, R¹¹ is an alkyl group having 3-18 carbon atoms, alkenyl group having 3-18 carbon atoms or aralkyl group having 7-18 carbon atoms, b is 1 or 2, and M is a hydrogen atom, alkali metal, -NH₄ or organic amine);
the monocarboxylic acid salt type anionic surfactant expressed by the following general formula (11):

R¹²COOM (11)

(wherein, R¹² is an alkyl group having 3-18 carbon atoms, alkenyl group having 3-18 carbon atoms or aralkyl group having 7-18 carbon atoms, and M is a hydrogen atom, alkali metal, -NH₄ or organic amine);
the dicarboxylic acid monoalkyl ester salt type or dicarboxylic acid mono(polyoxyalkylene alkyl ether) ester salt type anionic surfactant expressed by the following general formula (12):

R¹³(OA)ₐOOC-R¹⁴-COOM (12)

(wherein, R¹³ is an alkyl group having 3-18 carbon atoms, alkenyl group having 3-18 carbon atoms or aralkyl group having 7-18 carbon atoms, R¹⁴ an alkylene group having 3-10 carbon atoms, alkenylene group having 3-10 carbon atoms or alkyl arylene group having 7-18 carbon atoms, or phenylene group, A is an alkylene group having 2-4 carbon atoms, a is an integer in the range 0-20, and M is a hydrogen atom, alkali metal, -NH₄ or organic amine);
the alkyl ether carboxylic acid type or polyoxyalkylene alkyl ether carboxylic acid type anionic surfactant expressed by the following general formula (13):

R¹⁵O(AO)ₐCH₂COOM (13)

(wherein, R¹⁵ is an alkyl group having 3-18 carbon atoms, alkenyl group having 3-18 carbon atoms or aralkyl group having 7-18 carbon atoms, A is an alkylene group having 2-4 carbon atoms, a is an integer in the range 0-20, and M is a hydrogen atom, alkali metal, -NH₄ or organic amine);
the N-acyl-N-methylglycine salt type or N-acyl-N-methyl-β-alanine salt type anionic surfactant expressed by the following general formula (14): 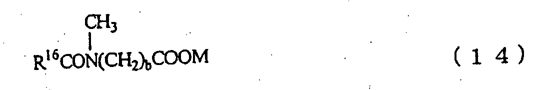 (wherein, R¹⁶ is an alkyl group having 3-18 carbon atoms, alkenyl group having 3-18 carbon atoms or aralkyl group having 7-18 carbon atoms, b is 1 or 2, and M is a hydrogen atom, alkali metal, -NH₄ or organic amine);
the N-acylglutamic acid salt type anionic surfactant expressed by the following general formula (15): 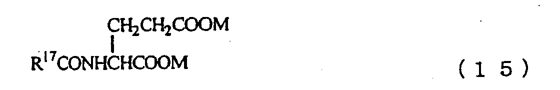 (wherein, R¹⁷ is an alkyl group having 3-18 carbon atoms, alkenyl group having 3-18 carbon atoms or aralkyl group having 7-18 carbon atoms, and M is a hydrogen atom, alkali metal, -NH₄ or organic amine);
the phosphoric acid monoalkyl ester disalt type or phosphoric acid mono(polyoxyalkylene alkyl ether)ester disalt type anionic surfactant expressed by the following general formula (16): 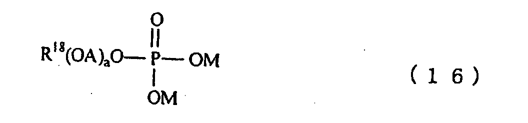 (wherein, R¹⁸ is an alkyl group having 3-18 carbon atoms, alkenyl group having 3-18 carbon atoms or aralkyl group having 7-18 carbon atoms, A is an alkylene group having 2-4 carbon atoms, a is an integer in the range 0-20, and M is a hydrogen atom, alkali metal, -NH₄ or organic amine); or
the phosphoric acid dialkyl ester salt type or phosphoric acid di(polyoxyalkylene alkyl ether)ester salt type anionic surfactant expressed by the following general formula (17): 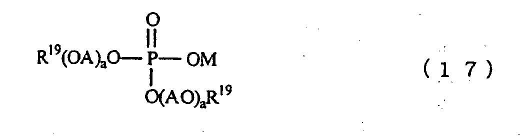 (wherein, R¹⁹ is an alkyl group having 3-18 carbon atoms, alkenyl group having 3-18 carbon atoms or aralkyl group having 7-18 carbon atoms, A respectively are alkylene groups having 2-4 carbon atoms, a respectively are integers in the range 0-20, and M is a hydrogen atom, alkali metal, -NN₄ or organic amine).

Examples of non-ionic surfactants include the polyoxyalkylene alkyl ether type or polyoxyalkylene alkyl ester type non-ionic surfactant expressed by the following general formula (18):

R²⁰O(AO)ₐH (18)

(wherein, R²⁰ is an alkyl group having 3-18 carbon atoms, alkenyl group having 3-18 carbon atoms or aralkyl group having 7-18 carbon atoms, A is an alkylene group having 2-4 carbon atoms, and a is an integer in the range 2-20); or
the polyoxyalkylene secondary alcohol ether type non-ionic surfactant expressed by the following general formula (19): 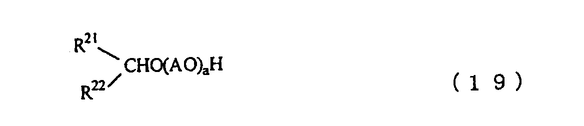 (wherein, R²¹, R²² respectively are alkyl groups having 1-10 carbon atoms or alkenyl groups having 2-10 carbon atoms, A is an alkylene group having 2-4 carbon atoms, and a is an integer in the range 2-20).

The surfactant having a branched chain used in this invention may be any of a surfactant wherein the anionic or non-ionic surfactant according to the above general formulae (4)-(19) has at least one of an alkyl group with a side chain, alkenyl group with a side chain, aralkyl group with a side chain and acyl group with a side chain, a surfactant wherein the polyoxyalkylene group contains a polyoxypropylene group and/or polyoxy(ethylethylene) group, and a surfactant having both. In the case of a surfactant using a secondary alcohol as in the general equation (8) or (19) as a starting material, the respective alkyl group or alkenyl group in the general equations may be a straight-chain alkyl group or straight-chain alkenyl group even if the polyoxyalkylene group is a polyoxyethylene group. One kind of these surfactants having a branched chain may be used alone, or two or more may be used in combination.

The anionic or non-ionic surfactant of the above general equations (4)-(19) used in this invention may be manufactured by the methods known in the art, and the manufacturing method is not particularly limited.

For example, the compound of general equation (4) may be obtained by performing an esterification reaction of an alcohol having a side chain or an alkylene oxide addition product of an alcohol having a side chain with maleic anhydride to obtain a maleic acid diester, and performing an addition reaction of acidic sodium sulphite with this,
the compound of general equation (5) may be obtained by performing an esterification reaction of an alcohol having a side chain or an alkylene oxide addition product of an alcohol having a side chain with maleic anhydride to obtain a maleic acid monoester, and performing a sulfonation reaction of sodium sulphite with this,
the compound of general equation (6) may be obtained by performing an ester exchange reaction of an alcohol having a side chain or an alkylene oxide addition product of an alcohol having a side chain with sodium dimethyl-5-sulfoisophthalate,
the compound of general equation (7) may be obtained by sulfurating an alcohol having a side chain or an alkylene oxide addition product of an alcohol having a side chain with concentrated sulfuric acid, fuming sulfuric acid or chlorosulfonic acid to neutralize it,
the compound of general equation (8) may be obtained by sulfurating a secondary alcohol or an alkylene oxide addition product of a secondary alcohol with concentrated sulfuric acid, fuming sulfuric acid or chlorosulfonic acid to neutralize it,
the compound of general equation (9) may be obtained by sulfurating a fatty acid monoglyceride having a side chain,
the compound of general equation (10) may be obtained by condensing a fatty acid having a side chain and an alkyloylamine to form an amide, and sulfurating the remaining OH groups,
the compound of general equation (11) may be obtained by neutralizing a fatty acid having a side chain with an alkali,
the compound of general equation (12) may be obtained by performing an esterification reaction of an alcohol having a side chain or an alkylene oxide addition product of an alcohol having a side chain and a dicarboxylic acid to form a monoester, and neutralizing with an alkali,
the compound of general equation (13) may be obtained by performing a reaction of an alcoholate of an alcohol having a side chain or an alkylene oxide addition product of an alcohol having a side chain and sodium monochloroacetate,
the compound of general equation (14) may be obtained by a condensation reaction of a fatty acid having a side chain and N-methylglycine or N-methyl-β-alanine,
the compound of general equation (15) may be obtained by a condensation reaction of a fatty acid having a side chain and L-glutamic acid,
the compounds of general equation (16), (17) may be obtained by performing an esterification of an alcohol having a side chain or an alkylene oxide addition product of an alcohol having a side chain and a phosphorylating agent such as phosphorus pentaoxide or phosphorus oxychloride,
the compound of general equation (18) may be obtained by an alkylene oxide addition of an alcohol having a side chain using an alkali catalyst, and
the compound of general equation (19) may be obtained by an alcohol having a side chain and an acid or alkali catalyst.

Examples of the alcohol having a side chain used for the above reaction are isopropyl alcohol, isobutyl alcohol, 2-ethylhexyl alcohol, an oxy alcohol having 8-18 carbon atoms (e.g., isodecyl alcohol, or isotridecyl alcohol), isostearyl alcohol, butane-2-ol, hexane-2-ol, heptane-2-ol, a secondary alcohol having 8-18 carbon atoms (e.g., commercial name: Dazitol, commercial name: Softanol), octylphenol and nonylphenol; while examples of the alkylene oxide addition product of the alcohol having a side chain are a compound obtained by adding 1-20 moles, but preferably 1-10 moles, of an alkylene oxide (specifically, ethylene oxide, propylene oxide or butylene oxide) to the alcohol having a side chain. If propylene oxide or butylene oxide is used as the alkylene oxide for the reaction, the alcohol used may be a straight-chain alcohol having 3-18 carbon atoms, the number of moles of alkylene oxide added preferably being 1-20 moles but more preferably 1-10 moles.

Examples of the fatty acid having a side chain used for the reaction are isolactic acid, 2-ethylhexanoic acid, isononanoic acid or isostearic acid, and examples of dicarboxylic acids are maleic acid, fumaric acid, succinic acid, phthalic acid, isophthalic acid and terephthalic acid.

One of the aforesaid alcohol having the side chain, straight-chain alcohol, fatty acid having a side chain, dicarboxylic acid and alkylene oxide may be used alone, but two or more may also be used in combination. By using the anionic surfactant or non-ionic surfactant synthesized using these starting materials as a hydrophilic component, this invention more easily achieves its objective. However, of the surfactants having a branched chain, the anionic surfactants expressed by the general formulae (4), (5), (6), (7), (16), (17) are preferred, and sulfosuccinic acid di(2-ethylhexyl) ester salt, sulfosuccinic acid (polyoxyethylene-2-ethylhexyl ether) ester disalt, 5-sulfoisophthalic acid di(2-ethylhexyl) ester salt, isostearyl sulfuric acid ester salt, polyoxyethyleneisostearyl ether sulfuric acid ester salt, phosphoric acid mono(2-ethylhexyl) ester disalt and phosphoric acid di(2-ethylhexyl) ester salt are particularly preferred.

The surfactant having a branched chain preferably is blended in the proportion of 0.1-10 mass % in the hydrophilic treatment composition. If the blending proportion of the surfactant is less than this lower limit, hydrophilic properties tend to decline and the loss of antifouling properties considerably tends to increase, whereas if it is higher than the upper limit, the hydrophilic protective film suffers more loss of strength.

The silicate compound used in this invention is a silicate compound expressed by the following general formula (1): 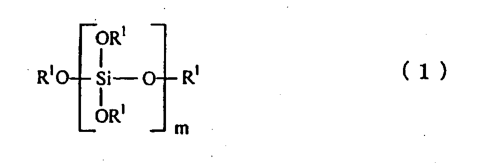 (wherein, in the formula (1), R¹ may be identical or different, and respectively are hydrogen atoms or alkyl groups having 1-3 carbon atoms, and m is an integer in the range 1-40).

This silicate compound may be a tetramethoxysilane, tetraethoxysilane, tetrapropoxysilane, tetraisopropoxysilane, partial hydrolysis condensates of these tetra-alkoxysilane compounds, and hydrolysis products of these tetra-alkoxysilane compounds and partial hydrolysis condensates, but of these, partial hydrolysis condensates of tetramethoxysilane are preferred.

m in the aforesaid general formula (1) is an integer in the range 1-40, but more preferably an integer in the range 1-20. If m exceeds 40, the film strength is insufficient. When R¹ in the aforesaid general formula (1) is an alkyl group having 4 or more carbon atoms, hydrolysis is insufficient and film strength is insufficient. Further, from the viewpoint of storage stability (pot life), it is preferred that all the R¹ in the aforesaid general formula (1) are not hydrogen atoms.

The silane coupling agent used in this invention is a silane coupling agent expressed by the following general formulae (2) and (3): 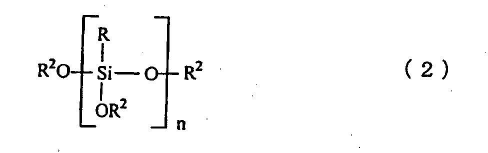 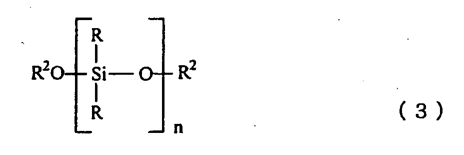 (wherein, in the formulae (2) and (3), R may be identical or different, and respectively are a hydrocarbon group selected from one of a group comprising an alkyl group having 1-8 carbon atoms, or a vinyl group, epoxy group, amino group, methacrylic group, mercapto group and phenyl group; R² may be identical or different, and respectively are a hydrogen atom or alkyl group having 1-4 carbon atoms; and n is an integer in the range 1-10).

Examples of alkyltrialkoxysilicate compounds which are silane coupling agents expressed by the general formula (2) used in this invention, are alkyltrialkoxysilicate compounds or polyether-modified silane coupling agents such as: methyltrimethoxysilane, ethyltrimethoxy silane, propyltrimethoxy silane, butyltrimethoxy silane, isobutyltrimethoxy silane, pentyl trimethoxy silane, n-hexyltrimethoxy silane, n-octyltrimethoxy silane, phenyltrimethoxysilane, benzyltrimethoxysilane, 3-glycidoxypropyltrimethoxy silane, 2-(3,4-epoxy cyclohexyl) ethyltrimethoxy silane, 3-methacryloxypropyltrimethoxysilane, vinyltrimethoxy silane, 3-mercaptopropyltrimethoxysilane, N-(2-amino ethyl)-3-aminopropyltrimethoxy silane, methyltriethoxy silane, ethyltriethoxy silane, propyltriethoxy silane, butyltriethoxy silane, pentyltriethoxy silane, n-hexyl triethoxy silane, n-octyltriethoxy silane, phenyltriethoxy silane, benzyltriethoxy silane, 3-glycidoxypropyltriethoxy silane, 2-(3,4-epoxy cyclohexyl) ethyltriethoxy silane, 3-methacryloxypropyltriethoxysilane, vinyltriethoxy silane, 3-mercaptopropyltriethoxy silane, 3-amino propyltriethoxy silane, 3-ureidopropyltriethoxy silane, 3-isocyanatepropyltriethoxysilane, methyltripropoxysilane, ethyl tripropxysilane, phenyltripropoxysilane, methyltriisopropoxy silane, ethyltriisopropoxy silane and phenyltriisopropoxy silane; partial hydrolysis condensates of the aforesaid alkyltrialkoxysilicate compounds, and hydrolysis products of these alkyltrialkoxysilicate compounds and partial hydrolysis condensates.

n in the aforesaid general formula (2) is an integer in the range 1-10, and if n exceeds 10, film-forming properties are poor. If R² in the aforesaid general formula (2) is an alkyl group having 5 or more carbon atoms, there is a remarkable decline of film-forming properties, hydrophilic properties and antifouling properties. If R in the aforesaid general formula (2) is an alkyl group having 9 or more carbon atoms, there is a remarkable decline of hydrophilic properties and antifouling properties. If R in the aforesaid general formula (2) is the aforesaid hydrocarbon group, the number of carbon atoms contained therein (excluding the number of carbon atoms in a vinyl group, epoxy group, amino group, methacrylic group, mercapto group and phenyl group) is preferably 1-3, and if this number of carbon atoms exceeds the upper limit, film-forming properties are poor and film hardness tends to decline.

Examples of the dialkyldialkoxysilicate compound which is the silane coupling agent expressed by the aforesaid general formula (3) used in this invention, are dialkyldialkoxysilicate compounds such as: dimethyldimethoxysilane, diethyldimethoxy silane, diphenyldimethoxysilane, (3-glycidoxypropyl)methyl dimethoxysilane, (3-methacryloxypropyl)methyldimethoxysilane, (3-mercaptopropyl)methyldimethoxysilane, (3-aminopropyl)methyl dimethoxysilane, N-(2-aminoethyl)-3-aminopropylmethyldimethoxy silane, dimethyldiethoxysilane, diethyldiethoxysilane, diphenyl diethoxysilane, (3-glycidoxypropyl)methyldiethoxysilane, partial hydrolysis condensates of the aforesaid dialkyldialkoxysilicate compounds, and hydrolysis products of these dialkyldialkoxysilicate compounds and partial hydrolysis condensates.

In the general formula (3), n is an integer in the range 1-10, and if n exceeds 10, film-forming properties are poor. If R² in the aforesaid general formula (3) is an alkyl group having 5 or more carbon atoms, there is a remarkable decline of crosslinking speed, hydrophilic property and antifouling property. Further, if R in the aforesaid general formula (3) is an alkyl group having 9 or more carbon atoms, there is a remarkable decline of hydrophilic property and antifouling property. If R in the aforesaid general formula (3) is the aforesaid hydrocarbon group, the number of carbon atoms contained therein (excluding the number of carbon atoms in a vinyl group, epoxy group, amino group, methacrylic group, mercapto group and phenyl group) is preferably 1-3, and if this number of carbon atoms exceeds the upper limit, film-forming properties are poor and film hardness tends to decline.

Of the silane coupling agents expressed by these general formulae (2) or (3), vinyltrimethoxysilane, phenyltrimethoxysilane, n-octyltrimethoxysilane and 3-glycidoxypropyltrimethoxysilane are preferred.

As for the silicate compound expressed by the general formula (1) and the silane coupling agent expressed by the general formulae (2) or (3), a completely hydrolyzed product is preferred. If an incompletely hydrolyzed product is used, crosslinking speed decreases, the hardness of the crosslinked film decreases, and due to the effect of remaining alkoxyl groups, the hydrophilic property of the film tends to become weaker. As a combination of these silicate compounds and silane coupling agents, the use of a partial hydrolysis condensate of tetramethoxysilane with vinyltriethoxysilane, partial hydrolysis condensate of tetramethoxysilane with phenyltrimethoxysilane, partial hydrolysis condensate of tetramethoxysilane with n-octylmethoxysilane and partial hydrolysis condensate of tetramethoxysilane with 3-glycidoxypropyltrimethoxysilane, is preferred.

The mixing ratio of the silicate compound expressed by the general formula (1) and the silane coupling agent expressed by the general formula (2) or (3), is preferably 10-50 mass % of silane coupling agent relative to 50-90 mass % of silicate compound, but more preferably 10-40 mass % of silane coupling agent relative to 60-90 mass % of silicate compound. If the silicate compound exceeds 90 mass %, and the silane coupling agent mixed with it accounts for less than 10 mass %, the film tends to become hard and brittle, and does not adhere easily to the resin surface or paint film surface. On the other hand, if the silicate compound accounts for less than 50 mass % and the silane coupling agent mixed with it accounts for more than 50 mass %, the film-forming property is poorer, and it is more likely that the film cannot retain the surfactant. By mixing the above two components in the aforesaid range, the film-forming property, adhesive property and film hardness on a resin surface or paint film surface are excellent, the surfactant having a branched chain can be fixed efficiently, and a more durable hydrophilic protective film tends to be formed.

In the hydrophilic treatment composition of this invention, the mixing ratio of the combined amount of the silicate compound expressed by the general formula (1) and silane coupling agent expressed by the general formula (2) or (3) (hereafter, "silicate compounds") relative to the surfactant having a branched chain, is preferably 95-15 mass % of silicate compounds relative to 5-85 mass % of surfactant having a branched chain. If the surfactant having a branched chain exceeds 85 mass % and the silicate compounds are less than 15 mass %, the surfactant amount is excessive, a satisfactory film cannot be formed and the film itself tends to become white. Also, as the silicate compounds cannot sufficiently retain the surfactant, hydrophilic properties cannot be retained in the long-term and the film tends to become soiled. On the other hand, if the surfactant is less than 5 mass % and the silicate compounds exceed 95 mass %, a practical hydrophilic property is not obtained and soiling occurs.

Hence, these silicate compounds are preferably blended in a proportion of 0.1-10 mass % in the hydrophilic treatment composition. If the blending proportion of the silicate compounds is less than the aforesaid lower limit, the crosslinking density falls, and hydrophilic properties tend to be unsatisfactory. On the other hand, if it exceeds the aforesaid upper limit, the film thickness increases, an interference membrane appear and the film appearance tends to be impaired due to paint unevenness.

The organic solvent used in this invention is preferably a hydrophilic solvent, e.g., an alcohol such as methyl alcohol, ethyl alcohol or isopropyl alcohol, a glycol such as ethylene glycol or propylene glycol, or a glycol ether such as ethylene glycol monomethyl ether, ethylene glycol monoethyl ether, diethylene glycol monomethyl ether and diethylene glycol monoethyl ether. Of these, alcohols and glycol ethers are preferred. These organic solvents are preferably blended in a proportion of 70-99 mass % in the hydrophilic treatment composition. If the blending amount of the organic solvent is less than the aforesaid lower limit, the scatter in the film thickness during application increases, and the film appearance tends to be impaired. On the other hand, if it exceeds the aforesaid upper limit, the film strength tends to decrease due to scatter in the drying rate.

The catalyst used in this invention may be an aluminum catalyst such as aluminum tris(acetylacetonate), a zinc catalyst such as zinc bis(acetylacetonate), a titanium catalyst such as titanium tetrakis(acetylacetonate), titanium bis(butoxy)bis(acetylacetonate) or titanium bis(isopropoxy) bis (acetylacetonate), a tin catalyst such as dibutyltin dilaurate, dibutyltin dioctate and dibutyltin diacetate, or an organic acid such as formic acid, acetic acid, propionic acid, oxalic acid and para-toluenesulfonic acid, but of these, an aluminum catalyst is preferred. These catalysts are preferably blended in a proportion of 0.01-1 mass % with the hydrophilic treatment composition. If the blending proportion of the catalyst is less than the aforesaid lower limit, hydrolysis of the silicate compound and silane coupling agent does not occur to a sufficient extent, the crosslinking density is insufficient and hydrophilic property tends to be unsatisfactory, whereas if it exceeds the aforesaid upper limit, the catalyst amount is excessive, film-forming is obstructed and the film tends to be unsatisfactory.

Further, the blending amount of water in the hydrophilic treatment composition of this invention is preferably 0.1-10 mass %. If the blending proportion of water is less than the aforesaid lower limit, the crosslinking density falls due to insufficient hydrolysis of the silicate compounds and the hydrophilic property tends to be unsatisfactory, whereas if it exceeds the aforesaid upper limit, scatter occurs on the paint film, and the film appearance tends to be poor. Further, the drying rate is slow, and workability tends to be poor.

In the hydrophilic treatment composition of this invention, in addition to necessary components comprising the aforesaid surfactant, silicate compound, silane coupling agent, organic solvent, catalyst and water, a resin component such as an acrylic-urethane resin, epoxy resin, polyester resin, acrylic resin, urethane resin, alkyde resin, aminoalkyde resin or silicone resin; a filler such as silica, an organic pigment, an inorganic pigment, ceramics or a metal oxide; or a dispersing agent, thickener, organic ultraviolet absorbent, organic antioxidant or leveling agent, can also be added. The blending proportion of these additives is preferably 30 mass parts of less relative to 100 mass parts of the sum total of the aforesaid surfactant, silicate compound, silane coupling agent, catalyst and water.

The silicate compound expressed by the aforesaid general formula (1) and silane coupling agent expressed by the aforesaid general formula (2) or (3) used in this invention undergo a dehydration condensation to form a three-dimensional structure, and it is known that one of the planes therein is an 8-membered ring structure comprising silicon-oxygen bonds. The Inventor suggests that, when this 8-membered ring structure is formed, a hydrophobic group having a branched chain in the surfactant having a branched chain is taken into the doughnut shape of the 8-membered ring and interlocks therewith. The alkyl group in the silane coupling agent expressed by the general formula (2) or (3) which is one component of the crosslinking agent undergoes chemical crosslinking to the resin surface or paint film surface, or an adhesion force develops due to Van der Waals forces. As a result, the three-dimensional structural film of the silicate compounds and the surfactant having the branched chain which is the hydrophilic component are strongly fixed, so that a durable hydrophilic protective film is formed. Therefore, in order to realize this hydrophilic mechanism, it is important that the surfactant does not fall out of the hole in the doughnut shape. For this purpose, the hydrophobic part of the surfactant or a part depending on it has a branched structure, and it is particularly important that this part is selected to have a larger diameter than that of the hole in the doughnut shape.

Next, the method of forming the hydrophilic protective film of this invention will be described. Specifically, in the method of forming the hydrophilic protective film of this invention, the hydrophilic treatment composition of this invention is coated on a substrate, and dried at 0-100°C.

When the hydrophilic treatment composition of this invention is applied to a resin surface or a paint film surface to form a protective film, the hydrophilic treatment composition is applied to the resin surface or paint film surface, and when it is dried, the drying temperature is 0-100°C, preferably 10-50°C and more preferably 15-40°C. If the drying temperature is less than 0°C, or if it exceeds 100°C, crosslinking spots or drying spots appear, and hydrophilic spots appear in the hydrophilic property of the coating material. Also, the film thickness of the hydrophilic protective film which is formed is preferably 3 µm or less, but more preferably 2 µm or less in terms of dry film thickness. If the dry film thickness exceeds 3 µm, dry spots increase when the film is dried, gloss decreases, film strength decreases and appearance is impaired, which tends to make this method unsuitable as an application method which can be easily used by the ordinary consumer. On the other hand, if the dry film thickness is 3 µm or less, dry spots decrease and there is no effect on the gloss of the film after drying, while if the film thickness is 2 µm or less, the film strength shows an ability to follow thermal expansions and contractions.

The pencil hardness of the hydrophilic protective film obtained by applying the hydrophilic treatment composition of this invention is preferably 2B-4H, but more preferably B-2H. If the pencil hardness of the hydrophilic film lies outside the range 2B-4H, it has an adverse effect on the hydrophilic protective film formed on the resin surface or paint film surface. If the pencil hardness is softer than 2B, the hydrophilic protective film is easily scratched and easily peels away, and water resistance tends to be impaired. On the other hand, if the pencil hardness is harder than 4H, due to the difference of thermal expansion coefficient between the resin layer or paint film layer and hydrophilic film, the film can no longer follow temperature variations, and layer peeling or cracks tend to occur easily.

The substrate to which the hydrophilic protective film is applied by the forming method of this invention is not particularly limited, examples being an automobile body which is treated with a resin or paint, a railway carriage, an aeroplane, walls, or non-metallic materials.

### (Examples)

This invention will now be described in further detail referring to examples and comparative examples, but it will be understood that the invention is not to be construed as being limited in any way thereby.

### (Example 1)

1.5g of partial hydrolysis condensates of tetramethoxysilane (Mitsubishi Chemical Corporation: commercial name "MKC Silicate MS-51", weight average molecular weight: 600), 0.5g vinyltrimethoxysilane, 0.1g aluminum tris(acetylacetonate), 0.75g ion exchange water, 2g of surfactant sulfosuccinic acid di(2-ethylhexyl) ester sodium salt (active component 70%), 4g methanol and 91.15g isopropyl alcohol were mixed, and matured at room temperature for 1 day to obtain a hydrophilic treatment composition.

The mass ratio of the surfactant having a branched chain and the silicate compounds in this hydrophilic treatment composition was 41:59, and the mass ratio of the silicate compounds expressed by the general formula (1) and the silane coupling agent expressed by the general formula (2) or (3) was 75:25.

### (Example 2)

0.8g of partial hydrolysis condensates of tetramethoxysilane (Mitsubishi Chemical Corporation: commercial name "MKC Silicate MS-56", weight average molecular weight: 1200), 0.2g vinyltrimethoxysilane, 0.05g aluminum tris(acetylacetonate), 0.25g ion exchange water, 1g of surfactant sulfosuccinic acid di(2-ethylhexyl) ester sodium salt (active component 70%), 2g methanol and 95.7g isopropyl alcohol were mixed, and matured at room temperature for 1 day to obtain a hydrophilic treatment composition.

The mass ratio of the surfactant having a branched chain and the silicate compounds in this hydrophilic treatment composition was 41:59, and the mass ratio of the silicate compounds expressed by the general formula (1) and the silane coupling agent expressed by the general formula (2) or (3) was 80:20.

### (Example 3)

0.7g of partial hydrolysis condensates of tetramethoxysilane (Mitsubishi Chemical Corporation: commercial name "MKC Silicate MS-51", weight average molecular weight: 600), 0.3g phenyltrimethoxysilane, 0.05g aluminum tris(acetylacetonate), 0.35g ion exchange water, 1.4g of surfactant sulfosuccinic acid di(2-ethylhexyl) ester sodium salt (active component 70%), 2g methanol and 95.2g isopropyl alcohol were mixed, and matured at room temperature for 1 day to obtain a hydrophilic treatment composition.

The mass ratio of the surfactant having a branched chain and the silicate compounds in this hydrophilic treatment composition was 50:50, and the mass ratio of the silicate compounds expressed by the general formula (1) and the silane coupling agent expressed by the general formula (2) or (3) was 70:30.

### (Example 4)

0.45g of partial hydrolysis condensates of tetramethoxysilane (Mitsubishi Chemical Corporation: commercial name "MKC Silicate MS-51", weight average molecular weight: 600), 0.05g n-octyltrimethoxysilane, 0.03g aluminum tris(acetylacetonate), 0.2g ion exchange water, 2g of surfactant sulfosuccinic acid di(2-ethylhexyl) ester sodium salt (active component 70%), 1g methanol and 96.27g isopropyl alcohol were mixed, and matured at room temperature for 1 day to obtain a hydrophilic treatment composition

The mass ratio of the surfactant having a branched chain and the silicate compounds in this hydrophilic treatment composition was 74:26, and the mass ratio of the silicate compounds expressed by the general formula (1) and the silane coupling agent expressed by the general formula (2) or (3) was 90:10.

### (Example 5)

1.5g of partial hydrolysis condensates of tetramethoxysilane (Mitsubishi Chemical Corporation: commercial name "MKC Silicate MS-51", weight average molecular weight: 600), 0.5g gamma-glycidoxypropyltrimethoxy silane, 0.1g aluminum tris(acetylacetonate), 0.75g ion exchange water, 2g of surfactant sulfosuccinic acid di(2-ethylhexyl) ester sodium salt (active component 70%), 4g methanol and 91.2g isopropyl alcohol were mixed, and matured at room temperature for 1 day to obtain a hydrophilic treatment composition.

The mass ratio of the surfactant having a branched chain and the silicate compounds in this hydrophilic treatment composition was 41:59, and the mass ratio of the silicate compounds expressed by the general formula (1) and the silane coupling agent expressed by the general formula (2) or (3) was 75:25.

### (Example 6)

1.5g of partial hydrolysis condensates of tetramethoxysilane (Mitsubishi Chemical Corporation: commercial name "MKC Silicate MS-51", weight average molecular weight: 600), 0.5g vinyltrimethoxysilane, 0.1g aluminum tris(acetylacetonate), 0.75g ion exchange water, 2g of surfactant polyoxyethylene (10EO) 2-ethylhexylether, 4g methanol and 91.5g isopropyl alcohol were mixed, and matured at room temperature for 1 day to obtain a hydrophilic treatment composition.

The mass ratio of the surfactant having a branched chain and the silicate compounds in this hydrophilic treatment composition was 50:50, and the mass ratio of the silicate compounds expressed by the general formula (1) and the silane coupling agent expressed by the general formula (2) or (3) was 75:25.

### (Comparative Example 1)

Commercial carnauba wax (Sure Luster Co.: commercial name: "Impact Master Finish") was used.

### (Comparative Example 2)

1.5g of partial hydrolysis condensates of tetramethoxysilane (Mitsubishi Chemical Corporation: commercial name "MKC Silicate MS-51", weight average molecular weight: 600), 0.5g vinyltrimethoxysilane, 0.1g aluminum tris(acetylacetonate), 14g ion exchange water, 1.4g of surfactant n-dodecyl sodium sulfate (active component 100%), 4g methanol and 78.5g isopropyl alcohol were mixed, and matured at room temperature for 1 day to obtain a hydrophilic treatment composition.

The mass ratio of the surfactant having a branched chain and the silicate compounds in this hydrophilic treatment composition was 41:59, and the mass ratio of the silicate compounds expressed by the general formula (1) and the silane coupling agent expressed by the general formula (2) or (3) was 75:25.

### (Test method)

### (Paint board preparation method)

An intermediate coat (commercial name "HS60", Kansai Paint Co., Ltd.) was air-sprayed on an experimental cation electropainting board (Test Piece Co.Ltd., JIS G-3141 (SPCC SD)) to a dry thickness of 30µm, and baked at 140°C for 20 minutes.

Next, a blue pearl top base coat (commercial name "Magichrome HM32-1 ", Color code B-96P, Kansai Paint Co., Ltd.) was air-sprayed to a dry thickness of 20µm, and baked at 140°C for 20 minutes. Finally, a blue pearl upper top coat (commercial name "Luger Bake HK-4 Clear", Kansai Paint Co., Ltd.) was air-sprayed to a dry thickness of 30µm, and baked at 140°C for 20 minutes.

The obtained paint board was thereby coated with a uniform, glossy paint film.

### (Hydrophilic treatment agent coating method)

A fixed amount (10g/m²) of the hydrophilic treatment composition prepared in Examples 1-6 and Comparative Examples 1 and 2 was applied to the above test paint board by a bar coater.

Subsequently, it was air-dried at 20°C, and after drying, was left at 20°C for 30 minutes.

100mL of the hydrophilic treatment composition was also applied to each passenger car.
The coating and drying temperature was 18-25°C, and after drying, curing was performed within this temperature range for 30 minutes.

### (Evaluation method)

(1) Evaluation of antifouling property and hydrophilicity by passenger-car running test,

The hydrophilic treatment composition of Examples 1-6 and Comparative Examples 1 and 2 was painted on a commercial passenger car, a 3 month running test was performed, and the antifouling property was visually determined. Water was actually poured on the car, and the hydrophilicity determined visually.

### Antifouling property (visual acceptance criteria)

O: Almost no soiling of the body;
Δ: Soiling of the body is a little conspicuous;
x: Soiling of the body is remarkable.

### Hydrophilicity (visual acceptance criteria)

O: The whole body gets wet;
Δ: The body partially repels water;
x: The whole body repels water.

### (2) Initial appearance and hydrophilic evaluation

The hydrophilic treatment composition of Examples 1-6 and Comparative Examples 1 and 2 was painted on the above test paint board, and tests (2)-(5) were performed. The state after coating the hydrophilic treatment composition was determined from the finished appearance and hydrophilic property. The appearance was evaluated by a visual determination, and the hydrophilic property was evaluated by measuring the water contact angle with ion exchange water using FACE (Kyowa Surfactant Chemical Instruments, Inc.).

### Appearance (visual acceptance criteria)

O: No change of appearance as compared with an untreated paint board;
Δ: Some change of appearance as compared with an untreated paint board;
x: Remarkable change of appearance as compared with an untreated paint board.

### (3) Hardness of paint film

The hardness was evaluated according to JIS K-5400.

### (4) Adhesion of paint film

The adhesion was evaluated according to JIS K-5400.

### (5) Appearance and hydrophilic evaluation after weathering treatment

A weathering treatment was performed according to JIS K-5400 using a Sunshine Weather Meter WEL-300-DC (Suga Test Instruments Co., Ltd.), and the change of appearance and hydrophilic property after 500 hours were evaluated.

The appearance was evaluated by a visual determination, and the hydrophilic property was measured by the water contact angle with ion exchange water using FACE (Kyowa Surfactant Chemical Instruments, Inc.).

### Appearance change after weathering treatment

O: No change of appearance before and after weathering treatment;
Δ: Some appearance change before and after weathering treatment;
x: Remarkable change of appearance before and after weathering treatment.

The results obtained by the aforesaid examination are shown in the following Table 1 and 2.

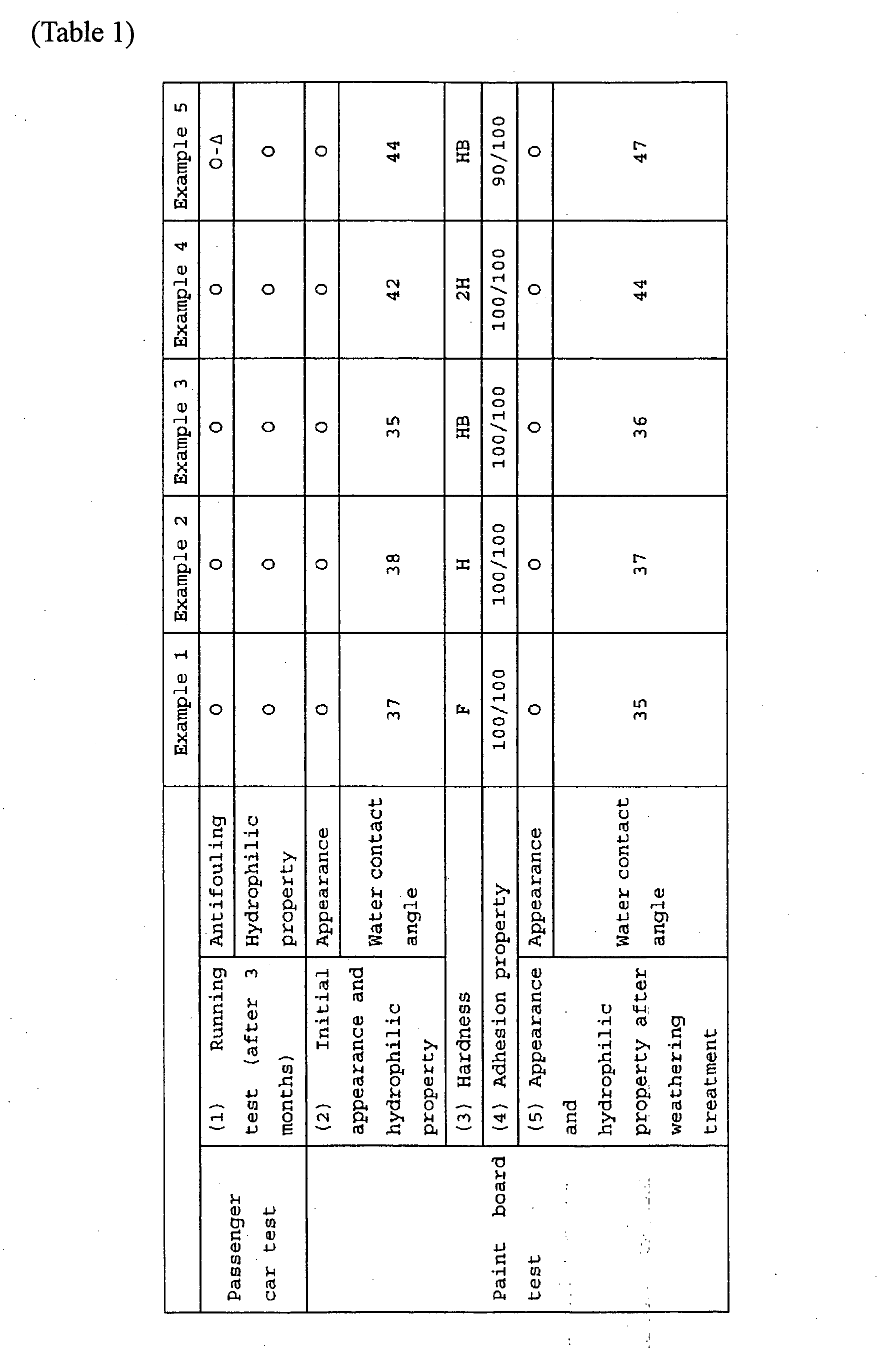

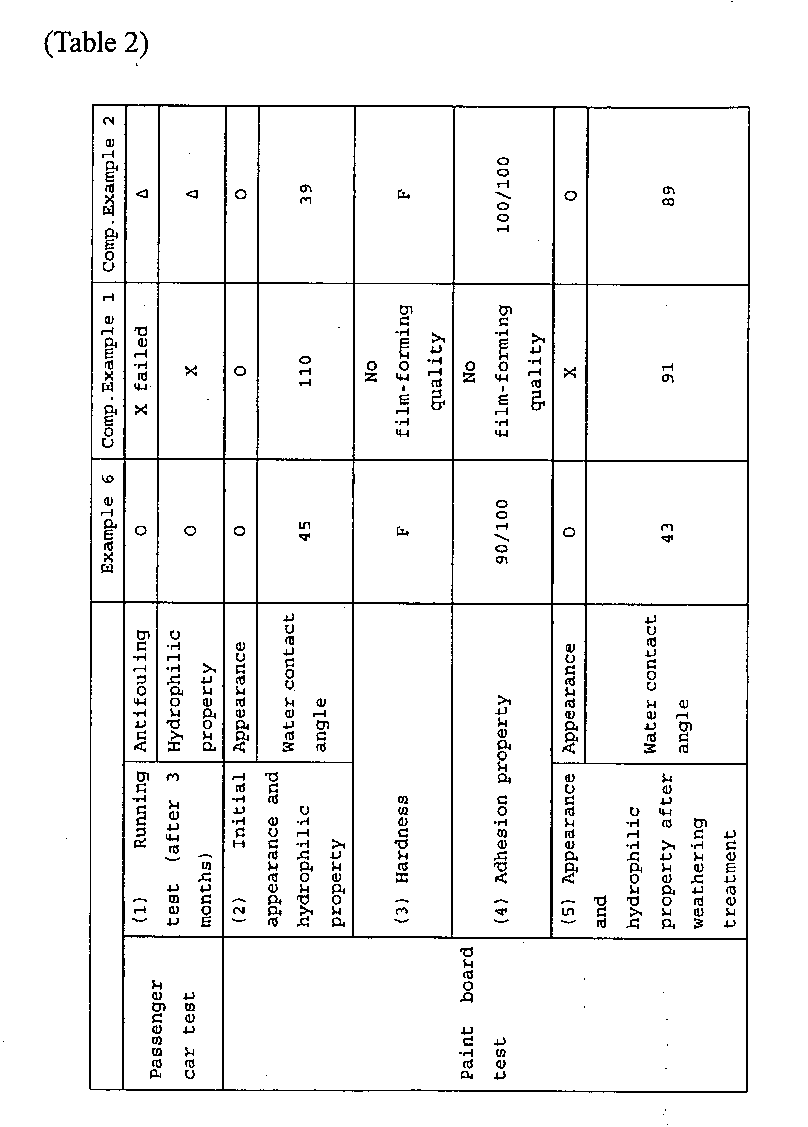

As is clear from the results shown in Table 1 and 2, when using the hydrophilic treatment composition of this invention, a hydrophilic protective film can be formed on a resin surface or paint film surface which has a hydrophobic property, and it was found that the hydrophilic protective film of the invention thus obtained has an excellent hydrophilic property, hardness, adhesion and antifouling property.

### Industrial Applicability

According to the hydrophilic treatment composition of this invention, a hydrophilic protective film can be formed on a resin surface or a paint film surface which has a hydrophobic property, and as this film has an excellent hydrophilic property, hardness, adhesion and antifouling property, it can prevent soiling of the resin surface or paint film surface over a long period of time.

## Claims

1. A hydrophilic treatment composition containing a surfactant having a branched chain, a silicate compound expressed by the following general formula (1), at least one moiety selected from silane coupling agents expressed by the following general formulae (2) and (3), an organic solvent, a catalyst and water. 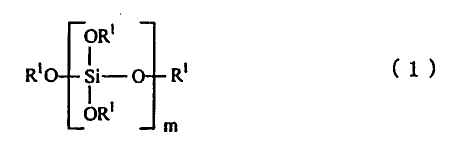 (wherein, in formula (1), R¹ may be identical or different, and respectively are a hydrogen atom or an alkyl group having 1-3 carbon atoms, and m is an integer from 1-40), 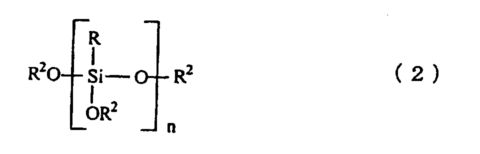 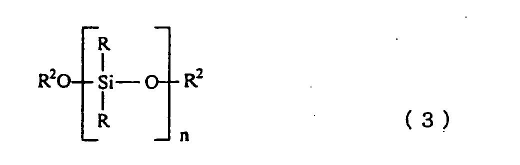 (wherein, in formulae (2) and (3), R may be identical or different, and respectively are an alkyl group having 1-8 carbon atoms or a hydrocarbon group selected from a group comprising vinyl, epoxy, amino, methacryl, mercapto and phenyl, R² may be identical or different, and respectively are a hydrogen atom or an alkyl group having 1-4 carbon atoms, and n is an integer from 1-10.)

2. The hydrophilic treatment agent according to Claim 1 wherein said surfactant having a branched chain is a surfactant having, as a hydrophilic group, at least one moiety selected from among a group comprising a sulfonic acid, sulfuric acid ester, carboxylic acid, phosphoric acid ester and salts thereof, and having, as a hydrophobic group, at least one moiety selected from among an aliphatic hydrocarbon group having a side chain, acyl group having a side chain, aralkyl group having a side chain, polyoxypropylene group and polyoxy(ethylethylene) group.

3. The hydrophilic treatment composition according to Claim 1 or 2 wherein the mass ratio of the total amount of surfactant having a branched chain, and the sum total amount of said silicate compound and said silane coupling agent, is 5-85:95-15.

4. The hydrophilic treatment composition according to any of Claims 1 to 3, wherein the mass ratio of the total amount of said silicate compound and said silane coupling agent, is 50-90:50-10.

5. A method of forming a hydrophilic protective film, wherein the hydrophilic treatment composition according to any of Claims 1 to 4 is applied to a substrate, and dried at 0-100°C.

6. The method of forming a hydrophilic protective film according to Claim 5, wherein the thickness after drying is 3µm or less.

7. The method of forming a hydrophilic protective film according to Claim 5 or 6, wherein the pencil hardness of said hydrophilic protective film is 2B-4H.

8. The method of forming a hydrophilic protective film according to any of Claims 5 to 7, wherein said substrate is treated with a resin or paint.

9. A substrate to which a hydrophilic protective film is applied by a method of forming according to any of Claims 5 to 8.
